# EUROPEAN PATENT SPECIFICATION

(11) **EP 1 173 389 B1**
(45) Date of publication and mention of the grant of the patent: **14.12.2005**
(21) Application number: 00914229.0
(22) Date of filing: 29.03.2000
(51) Int. Cl.: C02F 11/16

(54) **METHOD OF TREATING WASTE WATER**
VERFAHREN ZUR BEHANDLUNG VON ABWASSER
PROCEDE DE TRAITEMENT DES EAUX USEES

(30) Priority: 29.03.1999 FI 990696; 11.10.1999 FI 992178; 31.12.1999 FI 992853
(43) Date of publication of application: 23.01.2002
(73) Proprietor: Etor OY, 90650 Oulu (FI)
(72) Inventor: TORKKELI, Esko, FIN-90650 Oulu (FI)
(74) Representative: Laurinolli, Tapio Kullervo
(86) International application number: PCT/FI2000/000261
(87) International publication number: WO 2000/058230

(56) References cited:
- WO-A1-97/01513
- US-A- 4 659 472
- US-A- 5 611 935

## Description

The invention is related to treatment of waste water. Especially, the invention is related to treatment of sludge included in waste water, biological treatment of waste water by means of microorganisms, and removal of nutrients from waste water with biological methods.

In general, two main tasks may be seen in purification of waste water: removal of sludge, on the one hand, and removal of nutrients, on the other hand, from the water. In conventional purification processes, costs of sludge treatment are remarkable, and widely known are odor inconveniences caused by badly operating or as such defective treatment processes, or storage of untreated sludges. In both the treatment of sludge and the removal of nutrients, a lot of chemicals are still used, although efforts are made to increase the proportion of biological treatment in the processes. High costs are caused for use of chemicals, and often also more or less hazardous compounds remain thereof in the purified Add.1 waste water or in a purification product produced in the further treatment of sludge.

Various methods are known to treat sludge derived from waste water. In the inventor's earlier international patent application WO 97/01513, a waste sludge treatment process is presented in which solid additive is mixed with sludge and the resulting mixture is further treated to produce solid products, the process being characterized in that the solid additive includes aggregate-like hydrophobic grains of peat. In a preferred embodiment of the process the mixture is extruded.

A general problem in biological waste water treatment, like so called activated sludge method, is that waste water and sludge include not enough soluble carbon or carbon bound to short-chained compounds for a carbon source for microorganisms. At present, municipal waste water includes to an increasing degree cellulose, hemicellulose and lignin in which carbon is bound to long-chained compounds and which are difficult to decompose. Besides that, the easily available carbon is consumed all the time as the process proceeds. Another problem is that there is no such good substrate for microorganisms with which the water to be purified surely contacts and by means of which rapidly enough growing and efficient colonies of microorganisms could be provided in biological treatment phases. Furthermore, excess sludge is still remaining from the process which must be treated in one way or another.

The problem of availability of organic carbon is tried to be alleviated by adding to the waste water materials suitable for carbon source, like molasses, starch, ethanol, methanol, and so on. The use of additives, however, increases costs, and the affect thereof is weakened because they as soluble substances do not form any substrate for microorganisms. On the other hand, the amount of carbon easily available for microorganisms is tried to be increased in some processes by means of sludge hydrolysis in which organic matter is decomposed to short-chained compounds and to which the main part of the sludge is conducted to be fed back to the process in a phase in which a carbon source and substrate are particularly needed.

A further significant problem of biological waste water treatment processes is the bad controllability thereof. The amount of waste water varies widely because also rain and melt waters are conducted to purification plants. The amount is big in spring, for example, because of melt waters and at other times for heavy rains. In summertime, the amount of waste water, on the other hand, is otherwise the smallest. In relation to these variations, also the contents of nutrients and sludge in the water vary widely. With present biological methods, maintaining the operation of the process steady and efficient in variable conditions is impossible.

A method of treatment of waste waters is generation of biogas from the sludge included in waste water in a digester. Many problems relate usually to this process, too. Normally, the dry matter content of the waste water introduced to a digester is only 2 to 3 % because sludge particles include a lot of long-chained compounds, like cellulose, hemicellulose and lignin, and high contents of these particles would burden too much the action of microorganisms in the digester. A remarkably higher content of dry matter is desirable, because fats, proteins, etc. from which the gas is produced tend mostly to bind themselves to sludge particles and because the microorganisms taking care of the decomposition of these compounds and digestion need dry matter particles as a substrate for growth. Bigger contents were possible if the microorganisms had at the same time enough available carbon and if the action of the microorganisms could be made more efficient also otherwise.

An object of the invention is to provide such a method of treating waste water by which the problems described above to a great extent could be avoided.

For reaching this and other objects, a method of treating waste water according to the invention is characterized in that what is defined in the accompanying claims.

In the method according to the invention, the passive sludge particles from which easily available carbon is utilized already in the initial phases of the purification process, are gathered and carbonized in a composting process for which the energy is obtained largely from the sludge itself. The passive sludge particles removed from the process are fed back thereto as active grains or powder carbonized by composting, whereby this carbonized material maintains efficient microbial action and at the same time is vanishing as microorganisms consume carbon and nutrients therefrom. The sludge is treated and destroyed mainly by means of the sludge itself, and the remaining part thereof is in a solid form and, as hygienized and non-hazardous, suitable for many uses.

Use of many chemicals becomes needless. By means of the method, so good conditions for both aerobic and anaerobic microbial activities are provided that an essentially completely biological purification process is obtained. A need of initial hydrophobic grains, like peat grains, is quite small because grains may be circulated several times in a process. As hydrophobic grains may be composted, stored and used according to need, a purification process is also easy to control by increasing or reducing the use of grains in different phases according to need.

The operation of the digester producing gas from sludge may be made remarkably more efficient than earlier by applying the invention, and at the same time the sludge problem related thereto is solved.

The invention and some embodiments thereof are described in further detail in the following with reference to the accompanying drawings, in which:
Fig. 1 presents schematically an example of a waste water purification system in which the method of the invention is applied;
Fig. 2 presents schematically another example of a waste water purification system in which the method of the invention is applied;
Fig. 3 presents schematically an embodiment of a waste water purification method according to the invention;
Fig. 4 presents schematically another embodiment of a waste water purification method according to the invention;
Fig. 5 presents schematically still another embodiment of a waste water purification method according to the invention;
Fig. 6 presents schematically a realization of a composting method related to some embodiments of the method according to the invention; and
Fig. 7 presents a further application of the method according to the invention.

The initial material of hydrophobic organic grains,which are essential in the method of the invention, are preferably hydrophobic grains of peat. The term "hydrophobic organic grains" is used with good reason because the grains circulated several times in the method of the invention, the initial core of them being a hydrophobic grain of peat, may be split to smaller grains, and then a portion of the hydrophobic grains may consist totally or almost totally of sludge particles gathered by means of the grains.

An advantageous way of manufacturing this kind of grains is following. Well-decomposed sedge peat or similar kind of peat is pressed in a peat digging field in a usual way with intensive extrusion to pieces, either briquettes or so-called wavy sod peat. Peat briquettes or wavy pieces are dried on the peat digging field typically to a moisture content of 30 to 40 % by weight water. Dried pieces are crushed to grains the size of which is typically within a range of 2 to 20 millimeters. Grains may be dried further for improving the hydrophobicity thereof, for example to a moisture content of below 20 or even below 10 %. Hydrofobization begins at a moisture content of about 35 %, and the permanent, long-term hydrofobicity is achieved at a moisture content of about 10 % by weight water. In many cases a suitable moisture content is about 15 to 20 % by weight water. The grains manufactured in this way are compact and hard and withstand well both mechanical handling and handling in a wet process without absorbing water or breaking down. Hydrophobic grains of peat include carbon usually about 70 to 80 % of solids. Most of it is bound to compounds which are difficult to degrade: cellulose, hemicellulose and lignin, and only about 15 to 20 % of the carbon is soluble or in short-chained compounds. In addition to fibrous matter, this kind of peat includes also enough material decomposed to colloidal particles, which contributes to provide compact, hard and strongly hydrophobic grains. The nitrogen content is typically 2 to 3 % and phosphor content 0.2 to 0.4 % of solids. The fuel value of hydrophobic peat grains is good, about 10 to 20 MJ/kg, depending on the degree of dryness. In view of the operation of the method and utilization of the grains produced with the method, this kind of peat grains have excellent properties. Also manufacturing costs are reasonable.

Peat grains are manufactured in peat digging fields also by directly cutting or milling which is economically even more advantageous method. The grains obtained may be hydrofobized, but there are problems in making them compact and durable enough. With suitable treatment methods these properties probably may be improved, and then also this kind of peat grains possibly may be used in the method of the invention.

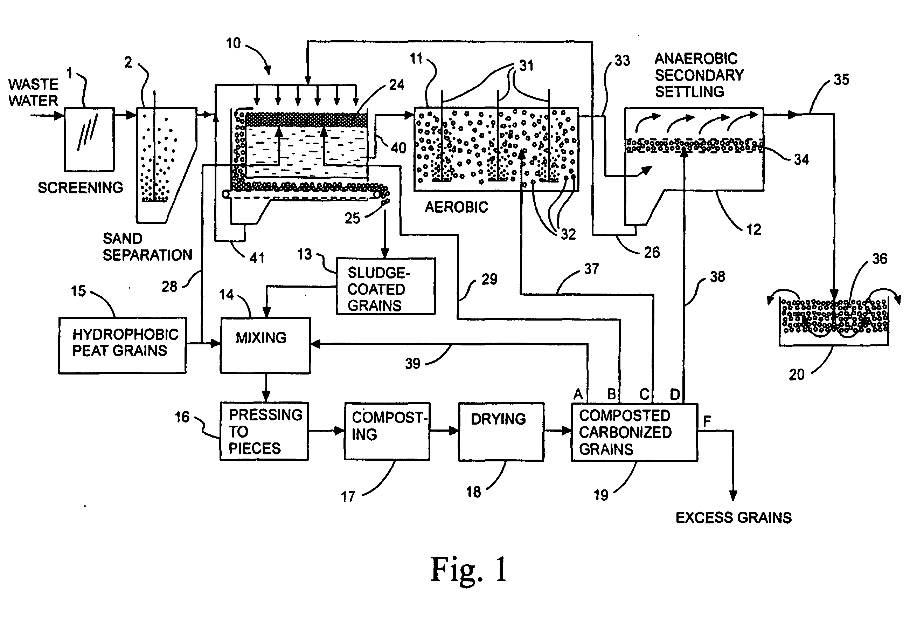

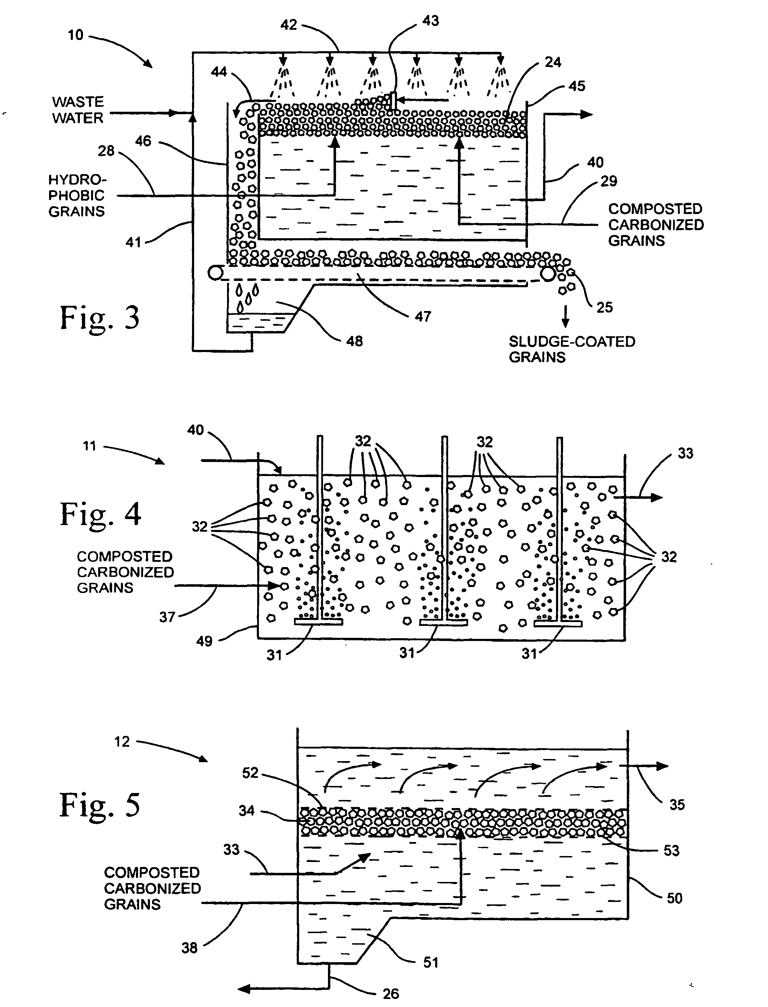

In the method of Fig. 1, waste water is conducted after screening 1 and sand separation 2 to phase 10 in which the waste is filtered through a filter layer 24. Fig. 3 presents the phase 10 in somewhat further detail. The water is spread above the tank 45 with an arrangement presented only schematically and indicated by reference sign 42 so that water is distributed evenly to the whole area of the filter layer 24. The filter layer consists of hydrophobic grains of peat and / or composted hydrophobic grains the core of which is an initial hydrophobic peat grain. After several circulations and splitting of grains grown too big, a portion of the grains may essentially totally consist of sludge particles. In the filter, hydrophobic grains filter sludge particles off from the waste water, and along with the grains becoming sludge-coated the surface layer of the filter begins to hold back water. The layer of sludge-coated grains is scraped with a surface scraper 43 over the brim of the tank 45 to an intermediate space 46, as is indicated by arrow 44. Below the tank there is a conveyor 47 which conveys the sludge-coated grains 25 to be treated further in a way described below. New grains, either hydrophobic grains of peat (reference sign 28) or composted hydrophobic grains (reference sign 29), are brought to the underside of the filter layer correspondingly.

Waste water coming to a purification plant has already in a discharging tube system gone through an initial phase of purification in which microbes have started to decompose organic matter included in the waste water whereby, at the same time, air and oxygen of the waste water have been consumed. Thus, the waste water coming to a purification plant is in an anaerobic condition. Particles produced in the decomposition have at the same time become hydrophilic. It is well-known that hydrophilic particles in water attach to hydrophobic particles for the effect of so called zeta-potential thereof. This happens also as waste water is conducted into a filter layer consisting of hydrophobic grains. Hydrophilic particles of waste water form a layer on the surface of the filter grains. As the hydrophobic grains do not absorb water, water goes through the filter. Hydrophobic grains of peat are somewhat lighter than water, so that a filter may be floating.

The waste water gone through the filter layer is conducted thereunder to the next of the purification process, as is indicated by arrow 40.

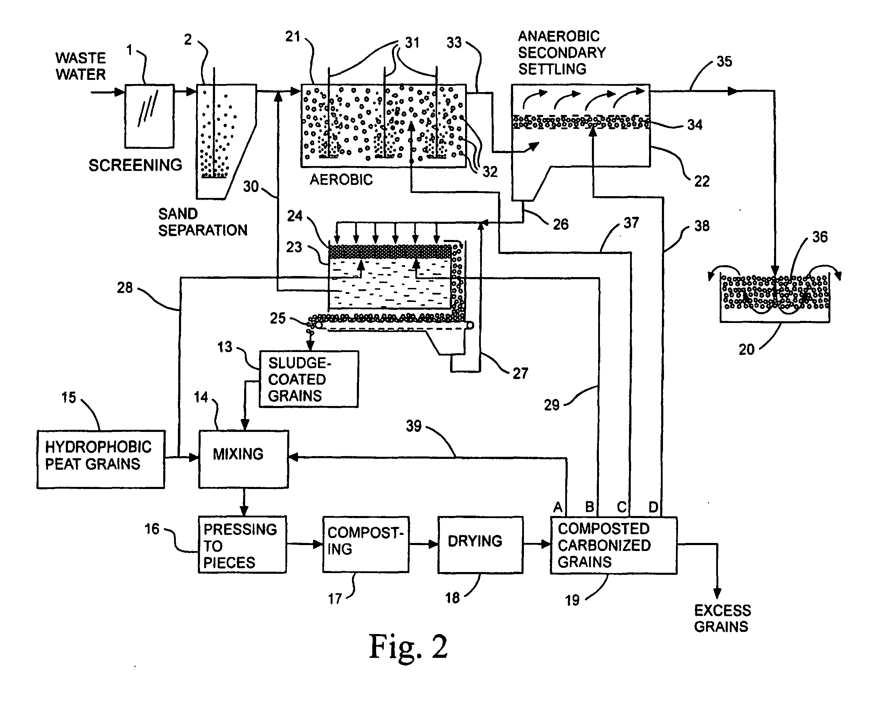

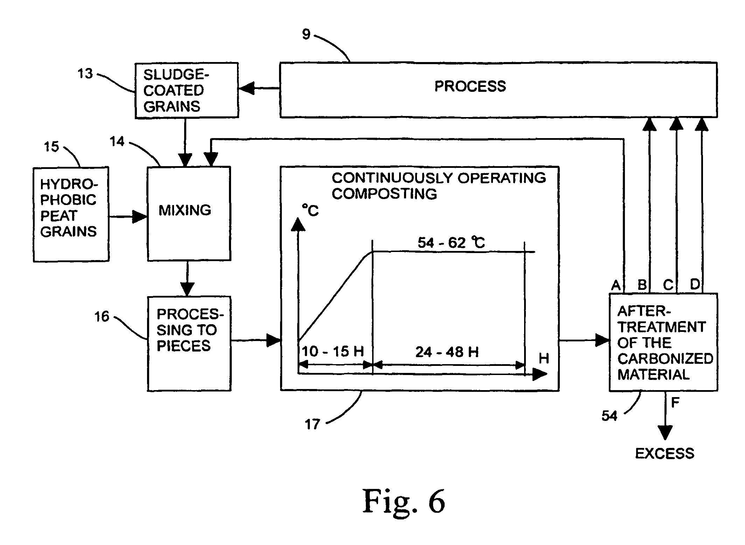

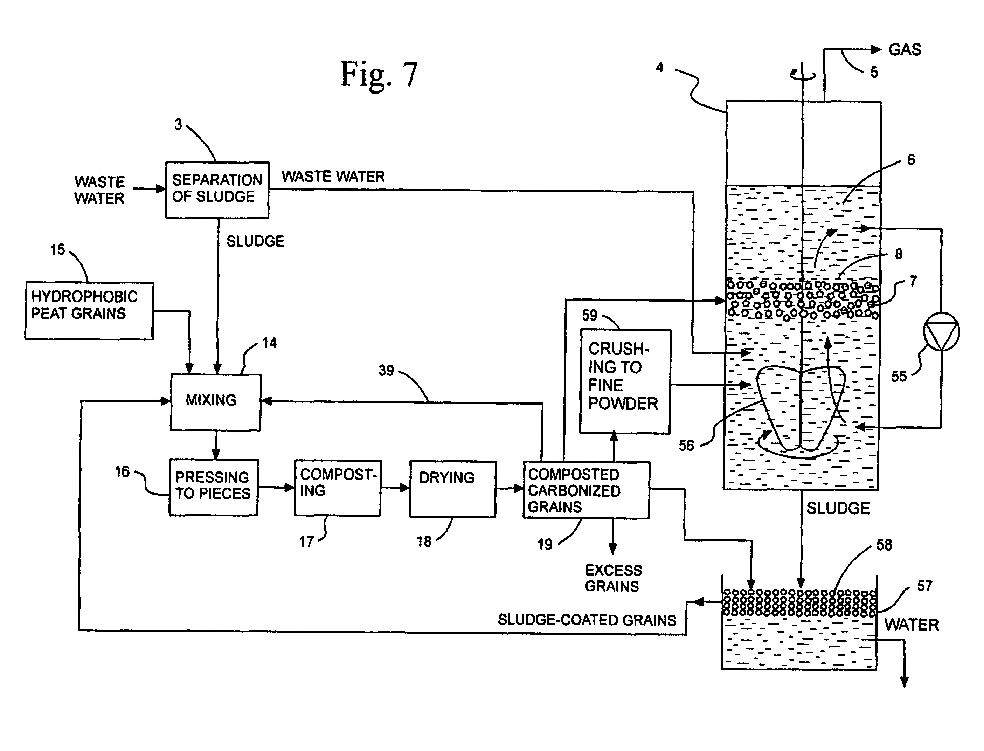

In the following, however, treatment of sludge-coated filter grains is first described with reference to Figs. 2 and 7. For treatment, it is advantageous to use the composting method which is described in the prior Finnish Patent Applications No. 990696 and 19992178 of the applicant. Sludge-coated grains 13 to the surface of which sludge, i.e. hydrophilic solid sludge particles and water bound thereby, is attached, are mixed according to need with hydrophobic grains of peat 15 in phase 14 for obtaining a mixed mass suitable for extrusion. A suitable moisture content is preferably 50 to 54 %. In phase 16, the mass is extruded to pieces which are composted in phase 17, advantageously in the process according to Fig. 6, in which the temperature of the pieces in the composter is raised rapidly, preferably within 10 to 15 hours, to the thermophilic range, preferably to a temperature range of 54 to 62 °C in which microorganisms active within this range decompose efficiently organic matter of both the peat grains and the layer of sludge particles on the surface thereof from which a remarkable part is fibrous matter difficult to decompose, i.e. cellulose, hemicellulose and lignin. Composting is advantageously carried out in a continuously operating composter into which layers of new pieces are added at suitable intervals, e.g. once a day. A time sufficient for composting is then, normally, 1.5 to 3 days. During the composting the grains are carbonized. Main part of the carbon thereof is converted to a mode easily available for microorganisms, i.e. soluble carbon or carbon bound to short-chained compounds.

After-treatment 18, 19 (Fig. 1) or 54 (Fig. 6) of the composted material may include drying, screening and sorting in which the grains are guided according to the size thereof to different uses. As is indicated by arrow 29, a portion of grains (B) may be introduced back to the filter layer 24 to compensate sludge-coated grains removed from the filter. A suitable grain size for this may be 10 to 60 millimeters, for example. A portion of the grains (A), on the other hand, may be circulated back to the initial phase of the composting, as is indicated by arrow 39. For this, e.g. smaller grains with a size of 6 to 10 millimeters are suitable. A portion of grains (C and D) may be used in other phases of waste water purification as a substrate and carbon source for microbes, as is indicated by reference signs 37 and 38. The grains with a size of 6 to 10 millimeters are suitable for this use, also, as well as very small grains with a diameter of 1 to 3 millimeters. The excess grains (F) may be used for other suitable purposes, e.g. as raw material for fertilizers.

The hydrophobic core of the grains essentially keeps the hydrophobicity during the stay in a filter or in a composting process. Therefore, composted grains are easy to dry, and also the surface layer thereof is hydrophobized rapidly during drying. By means of the amount of drying, the degree of hydrophobicity of the grains may be affected. Hydrophobic grains obtained in this way may be used again in a filter, and as they include a lot of organic carbon, they are very suitable as a carbon source and substrate for microorganisms, i.e. a so-called film surface for microorganisms.

Essential and significant in the composting described and the use thereof in a waste water purification process is that a small part, approximately about 10 %, of the organic carbon of the hydrophobic grains and the sludge attached thereto is consumed by aerobic microbial action (and naturally also a correponding amount of nitrogen) but, at the same time, by thermophilic microbial action the amount of soluble carbon is triplicated and the amount of carbon bound to short-chained compounds is increased by about 30 %. (The estimates of additions are based on results of experiments.) Hydrophobic grains of peat include carbon usually 70 to 80 % in all, but a large part of it is in long-chained compounds difficult to decompose: cellulose, hemicellulose and lignin. Very significant is also that these compounds, definitely, may be decomposed with thermophilic microorganisms and so the carbon thereof converted to a utilizable mode. By circulating grains in composting (e.g. 3 to 5 composting cycles), essentially all the carbon thereof is brought to an easily utilizable mode. The experience indicates also that this material prepared and carbonized by microorganisms is extremely well-suited for a substrate and "food", i.e. a source of carbon and nutrients, for other microorganisms, both aerobic and anaerobic. It is worth noticing, also, that the energy needed to convert hydrophobic grains and sludge of waste water in this way to a more advantageous mode is obtained almost totally from the material to be treated itself.

Waste water departing from the filtering phase 10 is next conducted to an aerobic phase 11 (Figs. 1 and 4), as is indicated by reference sign 40. The primary purpose thereof is to provide a strong enough microbial action for nitrification phase of removal of nitrogen and bring enough oxygen to be available for nitrification reaction. Waste water includes soluble carbon to some degree, but organic solid matter is essentially filtered off therefrom, whereby there are as such bad conditions for microbial growth. Favourable conditions are established by adding composted carbonized grains 32 to a tank 49 provided with vigorous aeration 31, the grains providing an excellent substrate for microbes. A strong colony of microbes is maintained in the tank by adding grains at need. By means of the amount of grains, the process may be controlled corresponding to the amount of waste water and the amount of nitrogen therein. The vigorous aeration circulates grains 32 in the tank 49, and a part of them is continuously removed from this phase with the departing waste water 33 to the next purification phase. New grains are needed also to compensate the grains removed. The grains may be dried to a suitable degree of hydrophobicity, so that they begin gradually to absorb water and, for this and for decomposing action of microbes, to decompose. Duration of decomposing may vary within a range of 1 to 10 days, for example, depending on the need to control the process and other affecting factors.

The next phase is an anaerobic secondary settling 12 (Figs. 1 and 5) in which a sunk filter layer 90 consisting of hydrophobic grains carbonized by composting is disposed in a tank 50. For arranging the filter in the tank, there are gratings or similar means 52 and 53 between which additional carbonized hydrophobic grains are supplied at need, as is indicated schematically by arrow 38. The waste water departing from phase 11 is introduced underneath a filter layer 34, as is indicated by reference sign 33, the outlet 35, on the other hand, being above the filter layer so that the water must go through the filter. Some amount of grains decomposing and waterlogging for microbial action come from the preceding phase to the tank 50, and also the grains of the filter 34 are gradually decomposing for the influence of anaerobic microbial action. The sludge produced in this way is settling on the bottom of the tank, and it is circulated from a bottom cavity 51 back to the filtering phase 10, as is indicated by reference sign 26.

In the anaerobic filter 34, strong action of anaerobic microorganisms is maintained for the nitrification phase of nitrogen removal. Carbonized hydrophobic grains provide an excellent substrate and carbon source for microorganisms. A suitable size for the grains fed to the filter may be 10 to 20 millimeters, for example, and they may be packed quite loosely in the filter. In this case, also, the grains may be dried to a suitable degree of hydrophobicity, so that they decompose in an anaerobic filter within 5 to 10 days, for example. So, new grains may be fed to the filter from time to time and thereby new film surface and carbon source for maintaining the action of microorganisms continuously strong enough. Also the operation of this filter and thereby this phase of nitrogen removal may be controlled in many ways, by means of the thickness of the filter layer, the amount and properties of the grains, and the supply of new grains, for example.

Moreover, hydrophobic grains may be used also for final filtering of departing water, as is shown by a schematically presented filter 20 in Figs. 2 and 3. The purpose is to filter off particles still existing in the water. The filter 20 may be a batch-type filter, for example, so that filter grains 36 may be changed at certain intervals. The interval may be several months or even longer, according to need.

Another example of biological system for waste water purification to which the method of the invention is applied is described in the following with reference to Fig. 2. In this case, the waste water is conducted after screening 1 and sand separation 2 directly to an aerobic phase 21 the operation of which is essentially similar to and the purpose of which is essentially same as those of the corresponding phase 11 in the example of Fig. 1. Here, the own carbon source of the waste water is used, and composted grains 32 are used only as an additional carbon source and a substrate for microbes by means of input 37 according to need.

Next, the waste water is fed to an aerobic secondary settling 22 the operation of which is essentially similar to and the purpose of which is essentially same as those of the corresponding phase 12 in the example of Fig. 1. The sludge of the waste water and the grains coming from the preceding phase, which grains also gather sludge thereto, are settling in this phase, and they are conducted via the filtering phase 24 back to the beginning of the process. The sludge is settling down rapidly in the settling tank because an anaerobic phase is concerned. A part of the sludge is also conveyed to an anaerobic filter 34 and is gradually settling down with the matter breaking down from the filter. The operation of the phase and the following filtering 20 of the outgoing water are similar to those of the corresponding phases described above in connection of the example of Fig. 1 and therefore are not discribed here again.

Also the filtering phase 24 operates similarly to the phase 10 described above in connection with the example of Fig. 1. In this case, only, the water is conducted back to the aerobic phase 21, as is indicated by reference number 30. Also the filter 24 is used and it is replenished in quite a same way.

Composted carbonized grains may be used in a similar way as is described above in connection with anaerobic settling phases 12 and 22, also in anaerobic treatment of sludge, i.e. in a digester in which biogas is produced of sludge. An example of applying the invention to this purpose is presented in Fig. 7. In phase 3, sludge is separated from waste water with some suitable method. The waste water still including solid matter particles, to some degree, and nutrients, like fat and proteins, as soluble or short-chained compounds, is introduced into a digester 4. The sludge is treated in the way described above in connection with Figs. 1, 2 and 6. A part of composted carbonized grains is circulated (reference sign 39) back to the mixing phase 14, a part crushed in phase 59 to fine powder to be added to the digester, and a part is used in a tank 57 and a filter 58 for filtering the sludge removed from the digester.

The process is operating as follows. Grains carbonized by composting hydrophobic peat grains and sludge several times are crushed to fine matter (instead of crushing also fine grains may be supplied which decompose a little slower) and this solid matter which includes a lot of carbon as soluble and in short-chained compounds is fed to the digester in addition to the waste water. As there is now a lot of easily available carbon, the content of solid matter may be raised in the digester to 15 to 20 %, so that a preferred C/N ratio, which is about 30:1, is achieved in the digester. Additionally, a layer 7 of carbonized hydrophobic grains is disposed in the middle part of the digester under a grating or similar arrangement 8. The purpose of this layer is to work especially as a substrate for digesting microorganisms, and therewith the colony of microorganisms and the action thereof is kept continuous and strong. New grains are added (e.g. by a screw) to the layer from time to time because the grains gradually decompose and are removed from the digester with the sludge to be removed. In a conventional way, the digester is provided with a pump which circulates water in a vertical cycle. Additionally, a rotating wing 56 is disposed in the lower part of the digester, the wing also mixing continuously the water and sludge in the digester. The purpose is to keep the sludge particles in motion (to prevent to settle on the bottom) so that the microbial decomposing action is maintained in the whole volume of the sludge. Remains of hydrolysis, i.e. passive fine sludge, gathered on the bottom of the digester is removed from time to time and treated with a hydrophobic filter 58. Sludge-coated grains are removed and brought to a mixing phase 14 and further on to composting, drying, and so on. New grains (not shown) are naturally supplied to the filter 58 to compensate the removed grains. The realatively pure filtered water is conducted out of the tank 57 from below the filter 58.

The object is that the whole volume of sludge becomes from time to time in contact with the grains and the colony of microorganisms formed on the grains, and it is obvious that this object may be reached also in other ways than those described above.

Some embodiments of the invention are described above bearing in mind, however, that the invention is not restricted thereto but may vary in many ways. The applicant's opinion is that the composting, for example, may be carried out quite efficiently also as a continuously operating drum composting by developing equipment and processes in a necessary way. Also other composting methods, like batch-type composting, may be used, although the efficiency of the method is then remarkably lower. Pressing of the mass to pieces for composting is not necessary, either, but the mass may be composted also in granular form. Pressing, however, helps sludge particles to attach to hydrophobic grains and, on the other hand, to extract water bound to sludge particles, removal of water being thereafter easier. Pressing the mass to pieces is also very advantageous in view of composting, as is noted above.

With a hydrophobic filter also fine sludge particles may be filtered from waste waters whereby only the grains of the filter must be smaller. A hydrophobic filter filters also matters not mixing with water, like oil, fat, bitumen and thinner, and many other particles, like paint particles. Many such matters may be harmful for further treatment of waste water but suitable for composting whereby removal thereof from the water with the method of the invention is very advantageous.

Mainly removal of nitrogen is considered above as an example of biological removal of nutrients. The method of the invention is suitable for removal of phosphor, as well, because the phosphor bound to sludge may be bound further to hydrophobic grains and because carbonized grains may be used as a carbon source and substrate for microorganisms also in biological removal of phosphor.

There are many alternatives for carrying out a hydrophobic filter and removal and gathering of sludge-coated grains, for example. With a surface filter, a scraper may be e.g. a rotating scraper which drops grains over the brim of a round tank. A person skilled in the art understands that a filter must not necessarily be a surface filter but also other arrangements are possible for carrying out the same operation. Also an anaerobic sunk filter may be carried out in many different ways. It may be e.g. a vertical filter through which the water is arranged to flow. Exchange of the grains may be continuous, or a filter may be a batch-type filter, as is already apparent from the above examples. It may be contemplated, also, that an anaerobic settling tank is round and that there is a filter wall separating the middle area from the peripheral area whereby water may be fed into the middle area and removed from the peripheral area, or vice versa. Also many other shapes and ways of positioning a filter are possible.

In a waste water purification process there are naturally also various pumps for transferring waste water or sludge from a place to another and various conveyors and feeding systems for transferring and feeding grains to filters, tanks or mixing devices, and many other arrangements required for a realization of such a process in practice. The embodiments of the method are described above quite schematically without considering these and other details which are not essential in the realization of the invention.

## Claims

1. A method of treating waste water, **characterized in that** it includes phases, in which:
sludge particles included in the waste water are caused to attach (10, 23; 20; 57) to hydrophobic organic grains (24, 36, 58), like hydrophobic grains of peat;
the thus obtained sludge-coated grains are carbonized by composting (17); and
the thus obtained composted carbonized grains are used as a substrate and carbon source (32, 34, 7) in biological phases (11, 12, 21, 22, 4) of the treatment of the waste water.

2. A method according to claim 1, **characterized in that** it further includes a drying step (18, 54) after the composting step (17).

3. A method according to claim 1, **characterized in that** a part of the grains (A, B) is circulated back (39, 29) to the phase of causing sludge particles included in the waste water to attach (10, 23; 20; 57) to hydrophobic organic grains (24, 36, 58).

4. A method according to claim 3, **characterized in that** grains are circulated 5 to 10 times.

5. A method according to claim 1, **characterized in that** the phase of causing the sludge particles to attach to hydrophobic organic grains includes filtering the waste water with said grains (10, 23, 20, 57).

6. A method according to claim 1, **characterized in that** the phase of causing the sludge particles to attach to hydrophobic organic grains includes mixing (14) the hydrophobic grains (15, 39) with sludge-coated grains (25) or sludge according to need and pressing (16) said mixture to pieces.

7. A method according to claim 1, **characterized in that** carbonized grains are used as a substrate and carbon source (32) of microorganisms in an aerobic phase (11, 21) of biological removal of nitrogen.

8. A method according to claim 1, **characterized in that** carbonized grains are used as a substrate and carbon source (34) of microorganisms in an anaerobic phase (12, 22) of biological removal of nitrogen.

9. A method according to claim 1, **characterized in that** carbonized grains are used as a substrate and carbon source of microorganisms in biological removal of phosphor.

10. A method according to claim 1, **characterized in that** carbonized grains are used as a substrate and carbon source (8, 59) of microorganisms in a digester (4) in which biogas is produced of sludge.

11. A method according to claim 1, **characterized in that** carbonized grains are used as a substrate and carbon source (32) of microorganisms by feeding them among the waste water under treatment (11, 21, 4).

12. A method according to claim 11, **characterized in that** carbonized grains are fed among the waste water in pulverized form (59).

13. A method according to claim 1, **characterized in that** carbonized grains are used as a substrate and carbon source of microorganisms by forming a layer thereof (34, 8) through which waste water is conducted (33, 35) or circulated (55).

## Patentansprüche

1. Verfahren zur Abwasserbehandlung, **dadurch gekennzeichnet, dass** es Phasen beinhaltet, in denen:
die im Abwasser enthaltenen Schwammpartikel zum Anhaften (10, 23; 20; 57) an hydrophobische organische Körner (24, 36, 58), wie hydrophobische Torfkörner gebracht werden,
**dadurch** entstandene Körner werden durch Kompostierung (17) verschwelt und
**dadurch** entstandene verschwelte Körner werden als Nährboden und Kohlequelle (32, 34, 7) für Mikroorganismen in den biologischen Abwasserbehandlungsphasen (11, 12, 21, 22, 4) verwendet.

2. Verfahren gemäß Anspruch 1, **dadurch gekennzeichnet, dass** es außerdem eine Trocknungsphase (18, 54) nach der Kompostierungsphase (17) beinhaltet.

3. Verfahren gemäß Anspruch 1, **dadurch gekennzeichnet, dass** ein Teil der Körner (A, B) zurück (39, 29) zur Phase zirkuliert wird, in der die im Abwasser enthaltenen Schwammpartikel zum Anhaften (10, 23; 20; 57) an hydrophobische organische Körner (24, 36, 58) gebracht werden.

4. Verfahren gemäß Anspruch 3, **dadurch gekennzeichnet, dass** die Körner 5 - 10 mal zirkuliert werden.

5. Verfahren gemäß Anspruch 1, **dadurch gekennzeichnet, dass** die Phase, in der die Schwammpartikel an hydrophobische organische Körner zum Anhaften gebracht werden, das Filtern des Abwassers mit den genannten Körnern (10, 23, 20, 57) beinhaltet.

6. Verfahren gemäß Anspruch 1, **dadurch gekennzeichnet, dass** die Phase, in der die Schwammpartikel an hydrophobische organische Körner zum Anhaften gebracht werden, bei Bedarf das Mischen (14) von hydrophobischen Körnern (15, 39) mit verschlämmten Körnern (25) oder mit Schlamm und das Pressen (16) der genannten Mischung in Stücke beinhaltet.

7. Verfahren gemäß Anspruch 1, **dadurch gekennzeichnet, dass** verschwelte Körner als Nährboden und Kohlequelle (32) für Mikroorganismen in der aerobischen Phase (11, 21) der biologischen Stickstoffreduzierung verwendet werden.

8. Verfahren gemäß Anspruch 1, **dadurch gekennzeichnet, dass** verschwelte Körner als Nährboden und Kohlequelle (34) für Mikroorganismen in der anaerobischen Phase (12, 22) der biologischen Stickstoffreduzierung verwendet werden.

9. Verfahren gemäß Anspruch 1, **dadurch gekennzeichnet, dass** verschwelte Körner als Nährboden und Kohlequelle für Mikroorganismen bei biologischer Phosphorreduzierung verwendet werden.

10. Verfahren gemäß Anspruch 1, **dadurch gekennzeichnet, dass** verschwelte Körner als Nährboden und Kohlequelle (8, 59) für Mikroorganismen im Faulreaktor (4), in dem aus dem Schlamm Biogas erzeugt wird, verwendet werden.

11. Verfahren gemäß Anspruch 1, **dadurch gekennzeichnet, dass** verschwelte Körner als Nährboden und Kohlequelle (32) für Mikroorganismen verwendet werden, indem sie dem zu behandelnden Abwasser (11, 21, 4) zugeführt wird.

12. Verfahren gemäß Anspruch 11, **dadurch gekennzeichnet, dass** verschwelte Körner in zermahlener Form (59) dem Abwasser zugeführt wird.

13. Verfahren gemäß Anspruch 1, **dadurch gekennzeichnet, dass** verschwelte Körner als Nährboden und Kohlequelle (32) für Mikroorganismen verwendet werden, indem aus den Körnern eine Schicht (34, 8) gebildet wird, durch die Abwasser geleitet (33, 35) oder zirkuliert wird (55).

## Revendications

1. Méthode pour le traitement des eaux usées, **caractérisé en ce qu'**elle inclut des phases, dans lesquelles
on fait adhérer les particules de boues contenues dans les eaux usées (10, 23; 20; 57) à des grains organiques hydrophobes (24, 36, 58), comme les grains hydrophobes de tourbe ;
les grains enrobés de boue ainsi obtenus sont carbonisés par compostage (17) ; et
les grains carbonisés compostés ainsi obtenus sont utilisés comme substrat de micro-organismes et source de carbone (32, 34, 7) dans les phases biologiques (11, 12, 21, 22, 4) du traitement des eaux usées.

2. Méthode selon la revendication 1, **caractérisée en ce qu'**elle comprend en plus une phase de séchage (18, 54) après la phase de compostage (17).

3. Méthode selon la revendication 1, **caractérisée en ce qu'**une partie des grains (A, B) est recyclée (39, 29) dans la phase dans laquelle on fait adhérer les particules de boues contenues dans les eaux usées (10, 23 ; 20 ; 57) aux grains organiques hydrophobes (24, 36, 58).

4. Méthode selon la revendication 3, **caractérisée en ce que** les grains sont recyclés 5 à 10 fois.

5. Méthode selon la revendication 1, **caractérisée en ce que** la phase dans laquelle on fait adhérer les particules de boues à des grains organiques hydrophobes comprend un filtrage des eaux usées avec lesdits grains (10, 23, 20, 57).

6. Méthode selon la revendication 1, **caractérisée en ce que** la phase dans laquelle on fait adhérer les particules de boues aux grains organiques hydrophobes comprend le mixage (14) des grains hydrophobes (15,39) avec les grains enrobés de boue (25) ou la boue suivant le besoin et le pressage (16) dudit mélange en pièces solides.

7. Méthode selon la revendication 1, **caractérisée en ce que** les grains carbonisés sont utilisés comme substrat de micro-organismes et source de carbone (32) dans une phase aérobie (11, 21) de la dénitrification biologique.

8. Méthode selon la revendication 1, **caractérisée en ce que** les grains carbonisés sont utilisés comme substrat de micro-organismes et source de carbone (34) dans une phase anaérobie (12, 22) de la dénitrification biologique.

9. Méthode selon la revendication 1, **caractérisée en ce que** des grains carbonisés sont utilisés comme substrat de micro-organismes et source de carbone dans l'élimination biologique du phosphore.

10. Méthode selon la revendication 1, **caractérisée en ce que** des grains carbonisés sont utilisés comme substrat de micro-organismes et source de carbone (8, 59) dans un digesteur (4) dans lequel on produit du biogaz par la boue.

11. Méthode selon la revendication 1, **caractérisée en ce que** des grains carbonisés sont utilisés comme substrat de micro-organismes et source de carbone (32) en les introduisant dans les eaux usées en traitement (11, 21, 4).

12. Méthode selon la revendication 11, **caractérisée en ce que** les grains carbonisés sont introduits dans les eaux usées sous forme pulvérisée (59).

13. Méthode selon la revendication 1, **caractérisée en ce que** des grains carbonisés sont utilisés comme substrat de micro-organismes et source de carbone en formant avec ces grains un lit (34, 8) à travers lequel les eaux usées sont conduites (33, 35) ou recyclées (55).
